Europäisches Patentamt

European Patent Office

Office européen des brevets

(19)

(11) Numéro de publication: **0 155 858**
**A1**

(12) # DEMANDE DE BREVET EUROPEEN

(21) Numéro de dépôt: **85400147.6**

(22) Date de dépôt: **29.01.85**

(51) Int. Cl.⁴: **G 01 S 5/16**
**F 41 G 3/22**

(30) Priorité: **02.02.84 FR 8401601**

(43) Date de publication de la demande:
**25.09.85 Bulletin 85/39**

(84) Etats contractants désignés:
**DE GB SE**

(71) Demandeur: **THOMSON-CSF**
**173, Boulevard Haussmann**
**F-75379 Paris Cedex 08(FR)**

(72) Inventeur: **Hidalgo, Jean-Luc**
**THOMSON-CSF SCPI 173, bld Haussmann**
**F-75379 Paris Cedex 08(FR)**

(74) Mandataire: **Trocellier, Roger et al,**
**THOMSON-CSF SCPI 173, Bld Haussmann**
**F-75379 Paris Cedex 08(FR)**

(54) **Système de repérage de la direction d'un ou plusieurs axes d'un corps mobile.**

(57) Dispositif permettant de repérer une direction (DV) liée à un corps mobile en utilisant deux sources lumineuses ponctuelles (S1,S2) montées sur ce corps et illuminées tour à tour.

Il comporte un dispositif détecteur (11) formé de deux sousensembles capteurs (10A, 10B) comportant chacun un réseau linéaire d'éléments photosensibles (1A,1B)) pour déterminer deux plans (P1, P2) passant par la source rayonnante et produire, par un calcul annexe (13) la localisation spatiale de la droite d'intersection correspondante, puis celle du segment (L2) entre les deux sources et consécutivement de la direction d'axe (DV) à repérer.

L'invention s'applique notamment aux systèmes viseurs de casque.

FIG_1

0155858

1

# SYSTEME DE REPERAGE DE LA DIRECTION
# D'UN OU PLUSIEURS AXES D'UN CORPS MOBILE

La présente invention concerne un système de repérage de la direction d'un ou plusieurs axes d'un corps mobile.

Il est parfois utile de repérer avec une certaine pécision la direction vers laquelle un corps mobile est orienté sans avoir de contact matériel avec celui-ci, ce qui revient à déterminer l'orientation relative de deux corps.

On rencontre ce type de problème, en particulier, dans les systèmes viseurs de casque utilisés dans les avions de combat ; le fonctionnement d'un tel système est rappelé brièvement ci-après. Par un dispositif collimateur annexe, le pilote voit à travers une glace semi-réfléchissante solidaire du casque et interposée sur un axe de vision monoculaire, l'image d'un réticule projeté à l'infini en superposition avec la scène extérieure.

Lorsqu'il veut désigner une cible de la scène observée, il amène à coïncider ce réticule avec la cible et signale que la coïncidence est réalisée au moyen par exemple d'une commande par bouton poussoir prévue à cet effet.

A condition de repérer, au moment de la signalisation, la position exacte de son casque, il est alors assez aisé de déterminer par rapport à l'avion, la direction de visée du pilote est de désigner l'objectif à un système d'arme, ou de pointer dans cette direction un système optique ou autre.

La présente invention permet de réaliser un système de repérage de direction répondant à un tel problème. La direction à repérer est liée à une stucture libre dont les mouvements s'effectuent dans un volume spatial déterminé. Dans l'application particulière envisagée, la structure libre comporte le casque du pilote et le volume est délimité par les débattements possibles de la tête du pilote à l'intérieur du cockpit. Le système de repérage comporte une première partie solidaire de la structure mobile et une seconde partie fixée à une structure extérieure, l'avion en l'occurence, pour mesurer les mouvements angulaires relatifs du premier corps constitué par la structure mobile par rapport à un système d'axes de référence lié au deuxième corps constitué par la structure externe. Le système de repérage permet ainsi, à partir de points fixes par rapport à l'avion, de repérer la position d'un objet porté par le casque du pilote, et de remonter, par là, grâce à un calcul, à la direction de visée.

Le casque étant porté par le pilote, il est important que la partie du dispositif qui est fixée au casque soit la plus légère, la moins encombrante, et présente le minimum de danger et d'inertie.

Des dispositifs de repérage de direction de ce type existent sous différentes formes.

Il est connu par le document de brevet français FR 2.399.033 un système de repérage de direction qui comporte, sur la structure mobile, trois diodes électroluminescentes disposées au sommet d'un triangle et, sur la structure externe, un dispositif détecteur composé de plusieurs capteurs élémentaires, chaque capteur comprenant un réseau linéaire d'éléments détecteurs derrière un cache pourvu d'une fente équipée d'une lentille cylindrique pour focaliser le faisceau reçu d'une diode en fonctionnement. La direction de la barrette détectrice est orthogonale à celle de la fente. L'utilisation de deux capteurs élémentaires orientés perpendiculaire l'un par rapport à l'autre, permet de définir avec un point source constitué par une diode, deux plans orthogonaux sécants selon une droite passant par ce point. Avec un troisième capteur qui peut être orienté de même que l'un des deux autres, on définit trois plans sécants passant par la source et consécutivement, la position spatiale du point source par rapport à la structure externe. Les diodes sont alimentées séparément et séquentiellement en sorte qu'elles rayonnent l'une après l'autre.

La localisation angulaire ou spatiale de chaque point source est obtenue par le calcul à partir de l'information de rang des éléments détecteurs illuminés. Le calcul permet de déterminer ensuite la direction de visée qui est liée au triangle de sources selon une relation prédéterminée ; par exemple, deux des diodes peuvent être disposées sur le casque selon une droite parallèle à cette direction, il en résulte que celle-ci se déduit aisément du positionnement du triangle.

Un objet de l'invention est d'obtenir une réalisation simple d'un tel système de repérage de direction en utilisant, également, un ensemble de capteurs à réseaux linéaires d'éléments photosensibles combinés avec un groupement de sources lumineuses ponctuelles fixées sur la structure mobile.

Suivant l'invention, il est proposé un système de repérage de la direction d'un axe d'un premier corps, mobile, par rapport à un système de référence lié à un deuxième corps, ledit système comportant, au moins un groupement de sources lumineuses ponctuelles solidaires du corps mobile et alimentées l'une après l'autre séquentiellement ; au moins un dispositif détecteur solidaire du deuxième corps, ledit dispositif détecteur comprenant deux capteurs élémentaires formés chacun d'une fente rectiligne transparente associée à un réseau linéaire d'éléments photosensibles orienté perpendiculaire à la fente, en sorte d'identifier un plan passant par la source, les deux capteurs définissant deux plans sécants ; un circuit de traitement des signaux détectés pour identifier lesdits plans par le rang des éléments sensibilisés, et des moyens annexes de calcul de la direction dudit axe par rapport audit système de référence à partir des dites identifications de rang, le système étant caractérisé en ce que chaque groupement comporte au moins deux sources pour définir un segment d'une droite solidaire du corps mobile, et que les réseaux sont parallèles à une première direction Z de référence et les fentes sont parallèles à une deuxième direction Y de référence, en sorte de localiser par le calcul les intersections des dits plans et calculer ensuite l'orientation dudit segment et correlativement la direction dudit axe.

4

Les particularités et avantages de la présente invention apparaîtront dans la description qui suit, donnée à titre d'exemple à l'aide des figures annexées qui représentent :

- la figure 1, un schéma d'un mode de réalisation d'un système de repérage de direction conforme à la présente invention ; et

- les figures 2,3 et 4, des schémas simplifiés relatifs au fonctionnement d'un système de repérage de direction selon la figure 1;

- la figure 5, un schéma relatif à une utilisation du système selon l'invention sur un viseur de casque ;

- la figure 6, une variante de réalisation du système, utilisant une troisième diode pour déterminer le roulis ;

- la figure 7, une autre variante utilisant au moins une diode supplémentaire pour un dépannage ;

- les figures 8 à 10, d'autres variantes de réalisation relatives au capteur dispositif détecteur du système de repérage.

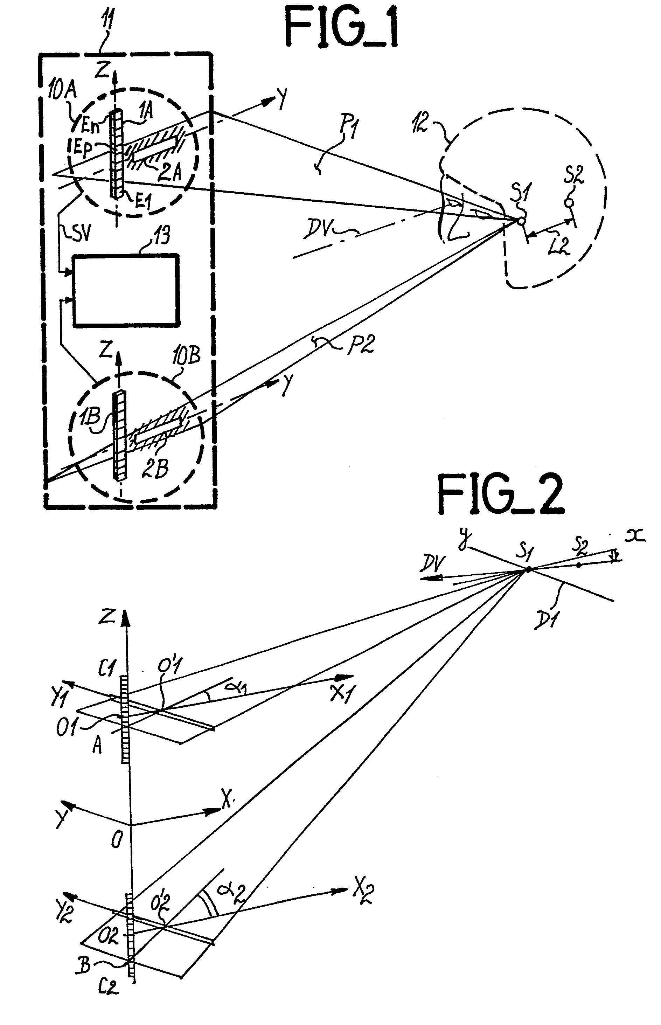

Un système de repérage selon l'invention comporte, selon la figure 1, au moins un groupement de sources lumineuses ponctuelles solidaires de la structure mobile 12 dont la direction d'un axe DV est à déterminer de manière instantanée et à tout instant. Chacun des groupements utilise, selon l'invention, deux sources S1 et S2 pour définir une direction S1-S2 liée à cette structure et un segment de droite de longueur L2 déterminée. Pour éliminer l'influence du roulis la direction S1-S2 est choisie parallèle à celle de l'axe DV à repérer, sinon des précautions doivent être prises pour calculer les compensations à faire dans les calculs comme il sera décrit ultérieurement. Des moyens d'alimentation, non figurés, sont prévus pour assurer l'alimentation sélective et périodique des sources.

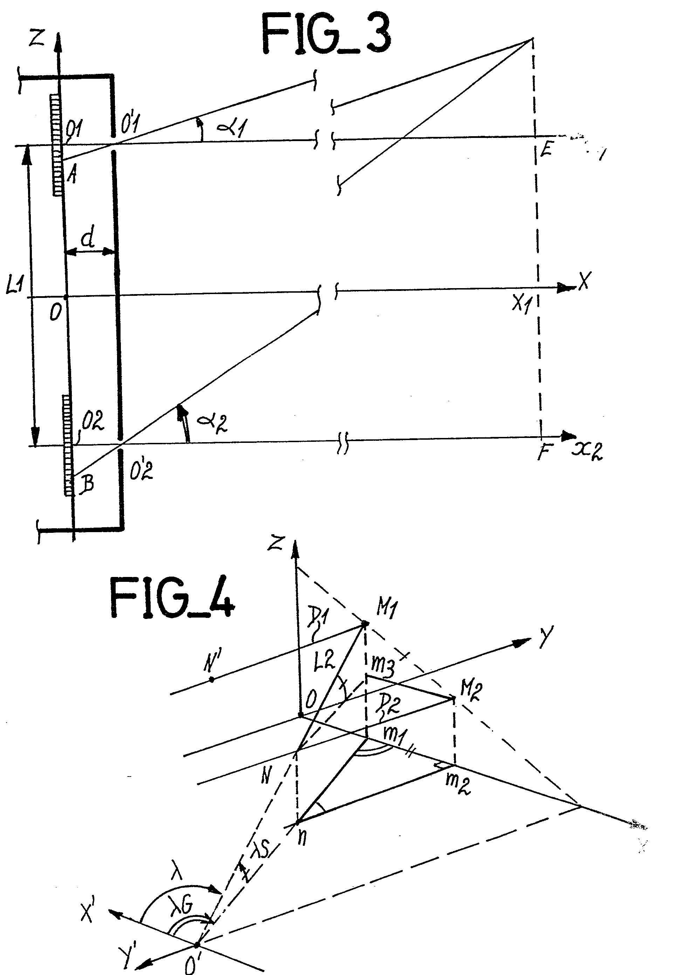

Un tel groupement est destiné à fonctionner en combinaison avec un dispositif détecteur 11 constitué, conformément à l'invention de deux capteurs élémentaires 10A et 10B. Chaque capteur, tel 10A, utilise une barrette photodétectrice 1A placée à l'arrière d'une fente rectiligne transparente 2A. La fente peut être réalisée à l'aide d'un masque optique, ou par usinage du boîtier (Fig 3). La direction du réseau linéaire 1A définie une première direction de ré-férence Z d'un système d'axes cartésiens X,Y,Z liés à la structure sur laquelle est monté le dispositif détecteur 11. La fente 2A est orientée perpen-diculaire à Z et définie la deuxième direction Y de référence utilisée pour la mesure. De manière préférée, les centres $O_1$ et $O'_1$ du réseau 1A et de la fente 2A sont alignés selon une direction X1 (Fig 2) paral-lèle à la direction X de référence en sorte que la disposition est équilibrée et symétrique par rapport au plan médian de chaque élément.

Le capteur 10B est positionné de même manière que le capteur 10A par rapport au système d'axes de référence XYZ, les barrettes étant décalées d'une distance L1 mesurée selon la direc-tion Z. Dans l'exemple représenté sur les Figs 1 à 4 les barrettes sont de plus alignées selon cette direction Z de référence. Comme on le verra ultérieurment, une version non collinéaire peut éventuellement être préférable pour l'exploitation.

Le fonctionnement des deux capteurs et du système est apparent sur les Figs.1 à 4. A l'instant considéré l'une des diodes, S1 par exemple, est alimentée et une partie du rayonnement lumineux omnidirectionnel émis par ce point passe par les fentes 2A et 2B. En considérant les fentes sans épaisseur en Z, la source S1 définit avec les fentes les plans P1 et P2 respectivement. Chaque plan coupe la barrette en un point A, B, auquel correspond un élément Ep sensibilisé. A cause des phénomènes de diffraction et de la largeur de la barrette en Z le faisceau lumineux a une certaine largeur et illumine plusieurs éléments, il peut en être tenu compte ultérieurement lors du traitement des signaux détectés pour déterminer avec une précision désirée le centre de la plage sensibilisée. Dans le concept simplifié retenu pour l'exposé, la position de l'unique élément Fp est parfaitement définie par son rang p, la barrette comportant n éléments E1 à En disposés à un pas déterminé. Ainsi, les dis-tances $O_1A$ et $O_2B$ (A et B, points d'intersection des plans P1 et P2 avec OZ) sont connues par identification du rang p, ainsi que les inclinaisons £1 et £2 des plans P1 et P2 par rapport à l'axe X qui sont connues par les relations tg £1 = $O_1A/O_1 O'_1$

6

et tg α2 = $O_2B/O_2 O'_2$, où $O_1 O'_1$ et $O_2 O'_2$ sont les valeurs entre-centres fixées par construction et qui peuvent être choisies égales. Le circuit de traitement 13 des signaux détectés SV identifie les rangs en A et B par lecture électronique des barrettes 1A et 1B correspondantes.

Les fentes 2A et 2B étant parallèles, les plans P1 et P2 se coupent selon une droite D1 de même direction Y et qui coupe le plan ZOX en un point M1 (X1,0,Z1). La source S1 est située sur cette droite D1 mais sa position en Y n'est pas connue, par contre, ses coordonnées en X et Y sont celles du point M1 et peuvent être aisément déterminées par le calcul en considérant les triangles $ABM_1$, $O_1AO'_1$ et $O'_1M_1E$, $O_2BO'_2$ et $O'_2M_1F$ de la Fig.3; en posant $OO_1 = OO_2 = L1/2$   $O_1O'_1 = O_2O'_2 = d$, OA = ZA   OB = ZB, $O_1A = u$ et $O_2B = v$, on obtient les relations :

$$X1 = d \left(\frac{L1}{v - u} + 1\right), \text{ ou } X1 = d \frac{L1}{ZA + ZB}$$

$$Z1 = v \left(\frac{L1}{v - u} + 1\right), \text{ ou } Z1 = (ZB - \frac{L1}{2}) \frac{L1}{ZA + ZB}$$

Ces deux valeurs définissent l'équation de la droite D1, v et u sont connus par l'identification de rang dans le circuit 13, et L1 et d sont définis par construction. La distance L1 d'éloignement des réseaux 1A et 1B par translation le long de l'axe Z est égale à celle entre les fentes 2A, 2B selon cette direction.

On obtiendra de même deux valeurs X2 et Z2 pour définir la droite D2 d'intersection des plans passant par les fentes et la deuxième source S2, cette droite coupant le plan XOZ en M2 (X2,0,Z2).

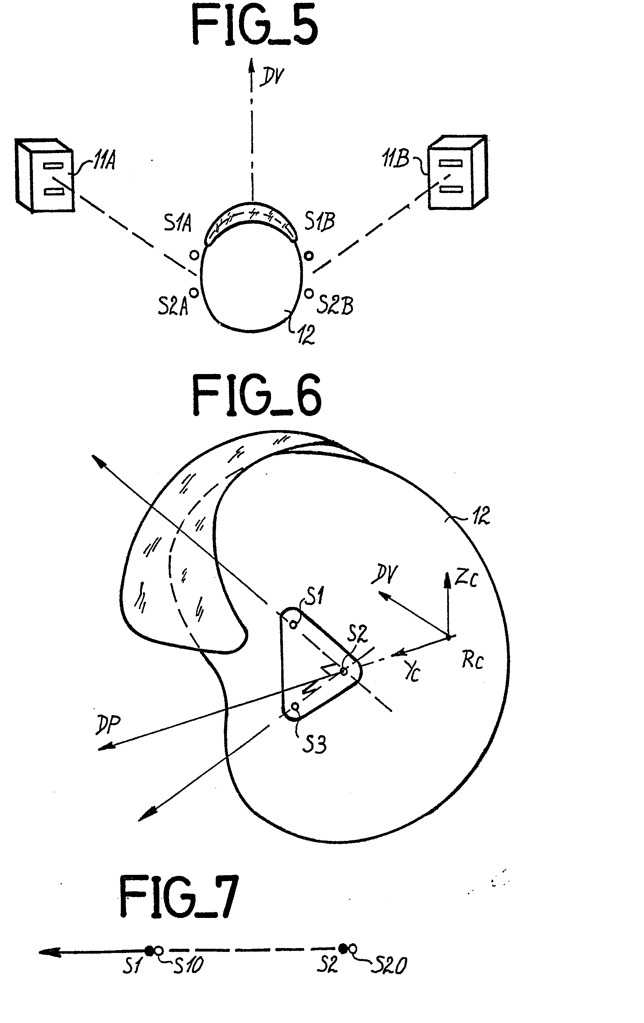

L'orientation de la droite S1 S2 dans l'espace est représentée sur la Fig.4 où l'on a reporté sur les droites D1 et D2 un segment de longueur connue égale à la distance L2 d'éloignement des sources S1 et S2, à partir du point M1 et en considérant le dépointage λ de ce segment M1N avec une direction X' parallèle à X. L'axe X' passe par le point O' d'intersection de M1N avec le plan XOY. Le dépointage λ se décompose de manière connue en deux valeurs angulaires λS

et λG correspondant respectivement au site et au gisement en considérant le plan XOY horizontal et en faisant abstraction du roulis. En considérant m1 n m2 la projection du triangle M1NM2 sur ce plan et M2m2 = m3m1, on obtient par exemple les relations :

$$\sin \lambda S = \left| \frac{Z1 - Z2}{L2} \right|$$

et
$$\cos \lambda G = \frac{\left| X2 - X1 \right|}{\sqrt{L2^2 - (Z1 - Z2)^2}}$$

permettant de définir les angles λS et λG en site et en gisement du dépointage angulaire λ de la direction S1 -S2 et donc de l'axe DV par rapport à une direction de référence.

Des moyens de gestion et de calcul sont prévus pour effectuer, selon une programmation simple, les commandes d'alimentation des diodes S1 et S2 et les calculs après identification de rang des éléments sensibilisés. Dans une application aéroportée à un viseur de casque, on peut utiliser un calculateur de bord qui reçoit du circuit de traitement 13 l'information de rang sous forme numérique.

Le circuit 13 peut être réalisé selon la description faîte dans le brevet français FR 2.399.033, par exemple. Il peut être logé, au moins en partie, dans l'espace libre entre les deux capteurs par suite de leur espacement L1.

Au niveau des capteurs 10A et 10B, des moyens de filtrage optique peuvent être prévus pour sélectionner le rayonnement utile émis par les sources, par exemple dans le spectre infrarouge pour éliminer toute gêne pour le pilote. Les fentes pourront également être équipées de lentilles cylindriques.

Dans le cadre d'une utilisation viseur de casque, le dispositif montré sur la Fig.1 est doublé ; le casque 12 constituant le corps mobile évoluant dans un volume délimité de la cabine, porte sur l'autre côté un deuxième groupement de deux diodes S1B et S2B combiné avec un deuxième dispositif détecteur 1B. Les deux dispositifs détecteurs 11A et 11B sont situés dans la cabine l'une à droite et l'autre à gauche du pilote pour coopérer chacun avec le groupement de diodes qui lui est associé comme représenté sur le schéma Fig.5.

8

L'adjonction d'une troisième diode S3 (Fig.6) permet de connaître l'information de roulis. En effet, le système permet de calculer la direction S1-S2 comme détaillé précédemment et en illuminant, à son tour et périodiquement la troisième diode, on peut définir tout aussi bien de la même façon soit la direction S2-S3, soit la direction S1-S3 des deux autres côtés du triangle ayant pour sommets ces trois diodes et dont les dimensions des côtés sont connues. Ainsi, en considérant par exemple que l'on dispose des directions S1-S2 et S2-S3 on peut calculer aisément selon des relations mathématiques connues la direction DP perpendiculaire au plan du triangle S1-S2-S3. La troisième direction S1-S3 peut être également calculée et utilisée pour définir la direction DP à titre de vérification. La variation de position du vecteur DP permet de calculer la rotation en roulis du casque par rapport à la direction DV et deux autres directions de référence Yc et Zc formant avec DV un trièdre cartésien de référence RC lié au casque. La direction DP peut d'ailleurs constituer l'une de ces direction Yc, comme représenté.

Dans la disposition à trois sources de la Fig.6, la troisième source S3 peut aussi être utilisée pour dépanner le système si l'une des deux sources S1 et S2 initialement prévues est défaillante. Cependant, si l'on pas besoin de calculer le roulis les diodes peuvent être alignées. Suivant la Fig.7, la diode S1 comporte, à proximité, la diode de secours S10 qui ne sera activée que si S1 tombe en panne. De même, S2 peut être suivi d'une diode de remplacement S20 à proximité.

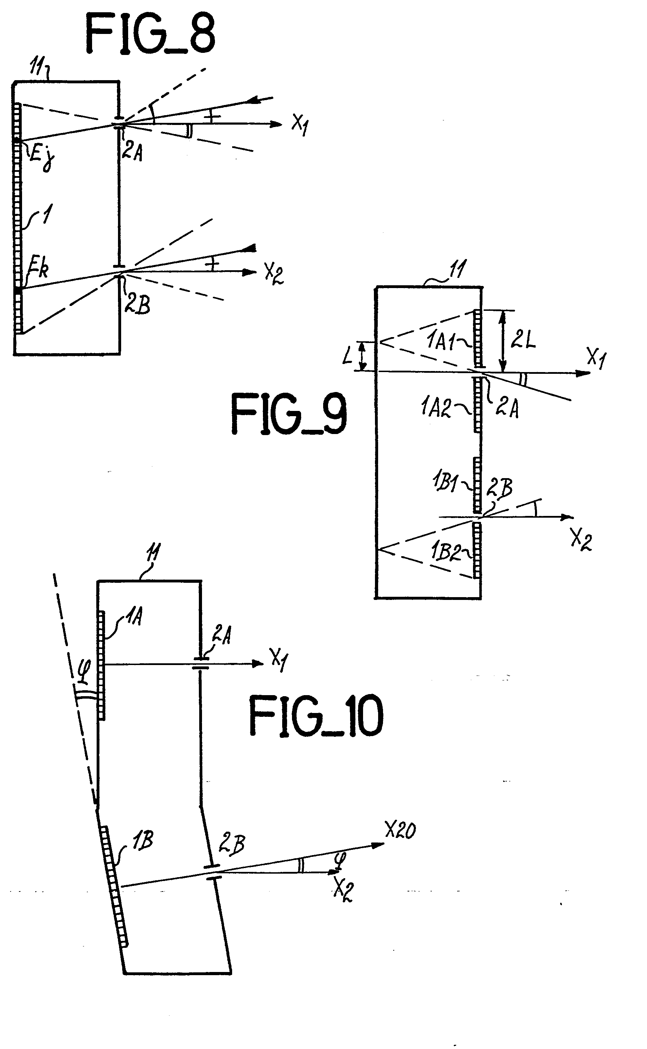

Les Figs.8 à 10 suivantes ont trait à d'autres variantes de réalisation.

Suivant la Fig.8, les barrettes 1A et 1B de la structure Fig.1 sont regroupées en une seule barrette 1 et pour une source considérée, le rayonnement parvient à travers les fentes en Ej et Ek respectivement, les rang de ces points ou zones étant définis ensuite par lecture de la barrette et traitement des signaux détectés par le circuit 13.

Dans la version Fig.9, le fond du boîtier capteur 11 ne supporte pas les barrettes mais est traité réfléchissant pour jouer le rôle de miroir plan et renvoyer le rayonnement. Les barrettes sont disposées à l'arrière de la face opposée qui comporte les fentes 2A, 2B. On augmente ainsi artificiellement la longueur du trajet optique entre fente et détecteur associés. La déviation L par rapport à l'axe X1 (ou X2) se trouve doublée. Chaque barrette se trouve décomposée en deux, 1A1 et 1A2 pour la barrette 1A par exemple, étant donné leur répartition de part et d'autre de la fente 2A. Pour des éléments détecteurs Ej de même dimension, la résolution angulaire est doublée ; chacune des barrettes 1A1 et 1A2 comporte autant d'élément que la barrette 1A du montage initial pour couvrir le même champ.

Enfin, la Fig.10 montre une version ou l'une des barrette 1B est inclinée par rapport à l'autre 1A. La direction X2 devient X20 avec une relation angulaire $\varphi$ connue par construction vis à vis de la direction X de référence du capteur 11. Cette disposition peut être plus intéressante pour l'exploitation. La donnée $\varphi$ est fournie à l'unité de calcul correspondante.

On peut se rendre compte que d'autres variantes conformes à l'invention peuvent être envisagées, par exemple celle de la Fig.9 à miroir peut être transposée dans le montage de la Fig.10. D'autres variantes sont obtenues en multipliant le nombre de groupement de diodes et/ou celui des capteurs fonctionnant en combinaison. En particulier, on peut utiliser chaque groupement de diodes en association avec deux ensembles capteurs constitués chacun de deux capteurs élémentaires ; connaissant le positionnement relatif des deux ensembles capteurs, à une distance donnée l'un de l'autre selon la direction Z par exemple, le calculateur peut grâce à la triangulation correspondante formée par une source et les deux ensembles capteurs affiner la mesure résultant de chaque ensemble capteur.

Il est entendu également que le dispositif détecteur 11 ou capteur, peut être équipé à l'endroit de la fente d'un dispositif optique, lentille cylindrique plan-convexe ou autre. Les sources seront de préférence des diodes électroluminescentes infrarouge et les réseaux des dispositifs à transfert de charge. Le terme fente est à considérer dans un sens général ; la face avant du boîtier détecteur peut être une plaque de verre rendue opaque par un dépôt en dehors des zones de fentes.

Comme on l'a vu, le système de repérage de direction décrit permet, en utilisant seulement deux sources lumineuses ponctuelles de repérer une direction d'axe de la structure mobile portant les sources. Dans l'application a un système viseur de casque il est intéressant de déterminer, outre le site et le gisement de la direction de visée, le roulis présenté par le casque. Ceci est obtenu moyennant une troisième source et en déterminant par le calcul la position d'un axe transversal au casque.

REVENDICATIONS

1. Système de repérage de la direction d'un axe d'un premier corps, mobile, par rapport à un système de référence lié à un deuxième corps, ledit système comportant, au moins un groupement de sources lumineuses ponctuelles solidaires du corps mobile et alimentées l'une après l'autre séquentiellement ; au moins un dispositif détecteur solidaire du deuxième corps, ledit dispositif détecteur comprenant deux capteurs élémentaires formés chacun d'une fente rectiligne transparente associée à un réseau linéaire d'éléments photosensibles orienté perpendiculaire à la fente, en sorte d'identifier un plan passant par la source, les deux capteurs définissant deux plans sécants ; un circuit de traitement des signaux détectés pour identifier lesdits plans par le rang des éléments sensibilisés, et des moyens annexes de calcul de la direction dudit axe par rapport audit système de référence à partir desdites identifications de rang, le système étant caractérisé en ce que chaque groupement comporte au moins deux sources (S1-S2) pour définir un segment (L2) d'une droite solidaire du corps mobile, et que les réseaux (1A,1B) sont parallèles à une première direction Z de référence et les fentes (2A,2B) sont parallèles à une deuxième direction Y de référence, en sorte de localiser par le calcul les intersections desdits plans (P1-P2) et calculer ensuite l'orientation dudit segment et correlativement la direction dudit axe (DV).

2. Système selon la revendication 1, caractérisé en ce que les deux réseaux (1A,1B) d'un dispositif détecteur (11) sont alignés selon ladite première direction Z de référence et sont disposés à une distance (L1) déterminée l'un de l'autre par translation le long de cette direction.

3. Système selon la revendication 2, caractérisé en ce que la distance (L1) d'éloignement des réseaux correspond à celle entre les deux fentes (2A,2B) selon cette même direction Z.

4. Système selon l'une quelconque des revendications 1 à 3, caractérisé en ce que chaque groupement comporte au moins trois sources (S1, S2, S3) disposées aux sommets d'un triangle.

5. Système selon l'une quelconque des revendications 1 à 3, caractérisé en ce que chaque groupement comporte au moins trois sources (S1,S2,S10,S20) alignées, deux d'entre elles étant disposées côte à côte (S1-S10 ou S2-S20) à une extrémité dudit segment (L2) en sorte de disposer d'une source de remplacment en cas de défaillance de celle utilisée normalement en ladite extrémité.

6. Système selon l'une quelconque des revendications 1 à 5, caractérisé en ce que les sources sont constituées par des diodes électroluminescentes rayonnant dans une bande spectrale infrarouge.

7. Système selon la revendication 2 et l'une quelconque des revendications 3 à 6, caractérisé en ce que les deux barrettes d'un dispositif détecteur (11) sont réunies en une seule (1) selon ladite direction Z.

8. Système selon l'une quelconque des revendications 1 à 7, caractérisé en ce que le dispositif détecteur (11) comporte un boîtier avec sur une face avant les fentes (2A,2B), à l'intérieur du boîtier et solidaire de la face avant les réseaux détecteurs (1A1, 1A2, 1B1,1B2) de part et d'autre des fentes, et la face arrière traitée pour former un miroir plan réfléchissant.

9. Système selon l'une quelconque des revendications 1 à 8 en excluant les revendications 2,3 et 7, caractérisé en ce que le dispositif détecteur (11) comporte un boîtier avec une paroi ayant une partie inclinée en sorte que les réseaux (1A,1B) montés sur cette paroi correspondante présente cette inclinaison (φ) entre eux.

10. Système selon l'une quelconque des revendications 1 à 9, utilisé pour réaliser un viseur de casque, et dans lequel la structure mobile est constituée par le casque du pilote (12) qui comporte latéralement de chaque côté droite et gauche au moins un groupement de sources ponctuelles, la structure externe constituée par le cockpit supportant au moins deux dispositifs capteurs (11A,11B) fonctionnant respectivement avec lesdits groupements latéraux (S1A-S2A et S1V-S2B).

# FIG_1

# FIG_2

# FIG_3

# FIG_4

# FIG_5

DV

11A

11B

S1A

S1B

S2A

S2B

12

# FIG_6

12

DV

Zc

S1

S2

Yc

Rc

DP

S3

# FIG_7

S1 S10 S2 S20

# FIG_8

# FIG_9

# FIG_10

0155858

Office européen
des brevets

**RAPPORT DE RECHERCHE EUROPEENNE**

Numéro de la demande

EP    85  40  0147

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl.4) |
|---|---|---|---|
| A | EP-A-0 003 696   (THOMSON-CSF)<br><br>* Figures 3,6; page 7, ligne 29 - page 9, ligne 22; page 13, ligne 15 - page 14, ligne 23 *<br><br>--- | 1,4,6, 10 | G 01 S    5/16<br>F 41 G    3/22 |
| A,D | FR-A-2 399 033   (THOMSON-CSF)<br><br>* Figures 1-3; page 4, ligne 12 - page 6, ligne 27; page 9, ligne 27 - page 10, ligne 29 *<br><br>----- | 1-4,6, 10 | |

**DOMAINES TECHNIQUES RECHERCHES (Int. Cl.4)**

G 01 S
G 01 B
F 41 G
G 02 B

Le présent rapport de recherche a été établi pour toutes les revendications

| Lieu de la recherche<br>LA HAYE | Date d'achèvement de la recherche<br>09-05-1985 | Examinateur<br>CANNARD J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82